# FASCICULE DE BREVET EUROPEEN

(11) **EP 2 406 662 B1**
(45) Date de publication et mention de la délivrance du brevet: **10.07.2013**
(21) Numéro de dépôt: 10710264.2
(22) Date de dépôt: 11.03.2010
(51) Int. Cl.: G01T 1/169, G01T 7/00

(54) **DISPOSITIF DE CARACTÉRISATION RADIOLOGIQUE PROTÉGÉ CONTRE DES SOURCES DE RAYONNEMENT IONISANT PARASITES**
VOR PARASITÄREN QUELLEN IONISIERENDER STRAHLUNG GESCHÜTZTE EINRICHTUNG ZUR RÖNTGENCHARAKTERISIERUNG
DEVICE FOR X-RAY CHARACTERISATION PROTECTED AGAINST PARASITIC IONISING RADIATION SOURCES

(30) Priorité: 13.03.2009 FR 0951594
(43) Date de publication de la demande: 18.01.2012
(73) Titulaire: COMMISSARIAT A L'ENERGIE ATOMIQUE ET AUX ENERGIES ALTERNATIVES, 75015 Paris (FR)
(72) Inventeur: GIRONES, Philippe, F-30200 Venejan (FR); BRENNEIS, Christophe, F-30290 Saint Victor La Coste (FR); LAMADIE, Fabrice, F-30330 Connaux (FR); DUCROS, Christian, F-30130 Pont Saint Esprit (FR)
(74) Mandataire: Ilgart, Jean-Christophe
(86) Numéro de dépôt international: PCT/EP2010/053104
(87) Numéro de publication internationale: WO 2010/103071

(56) Documents cités:
- EP-A1- 0 674 188
- US-A- 3 107 276
- US-A1- 2005 230 628
- US-B2- 7 095 030

## Description

### DOMAINE TECHNIQUE

La présente invention concerne un dispositif de caractérisation radiologique protégé contre des sources de rayonnement ionisant parasites. Par caractérisation radiologique, on veut dire que l'on va pouvoir effectuer, avec le dispositif, des mesures quantitatives, c'est-à-dire de débit de dose, et des mesures sur la qualité des radioéléments présents grâce à la spectrométrie.

Les interventions en milieux hostiles sont fréquentes dans l'industrie nucléaire notamment dans les opérations de démantèlement d'installations nucléaires. Ces opérations sont bien sûr encadrées par des règles, des pratiques et des méthodes d'optimisation, par exemple par l'application du principe ALARA (as low as reasonably achievable soit aussi bas que raisonnablement possible). Ce principe a été mis en place par des industriels afin de réduire les expositions à des rayonnements ionisants de manière à ce qu'elles soient aussi basses que possible compte tenu des facteurs économiques et sociaux. Dans la pratique, les opérations techniques passent par la maîtrise du contexte et plus précisément par la caractérisation radiologique in situ, c'est-à-dire par une connaissance du niveau de concentration de la contamination et sa localisation ainsi que la qualité des radioéléments présents dans un lieu donné.

### ÉTAT DE LA TECHNIQUE ANTÉRIEURE

Il existe des dispositifs de caractérisation radiologique tels que ceux décrits dans la demande de brevet français FR 2 789 304 qui associent une gamma caméra avec un détecteur de spectrométrie gamma collimaté, le collimateur ayant un champ d'observation qui est inclus dans le champ d'observation de la gamma caméra. Dans ce dispositif, le collimateur est fixe et entoure le détecteur de spectrométrie gamma. Le document « Caractérisation et modélisation d'un site radioactif par usage combiné du scanner gamma unidirectionnel EDR et de l'outil de planification VISIPLAN 3D », F. Vermeersch et al., 2003 montre l'utilisation d'un analyseur gamma dans lequel un détecteur gamma de type cristal CsTi couplé à une photodiode est logé dans un boîtier en acier équipé en face avant d'un blindage tronconique, ce blindage étant prolongé par un collimateur en acier. Il apparait que pour mettre en évidence des sources de rayonnement ionisant de niveaux très différents, comme on peut en trouver dans des bâtiments en cours de démantèlement, il est nécessaire d'avoir à disposition des collimateurs de tailles différentes interchangeables.

On connait aussi un dispositif de caractérisation radiologique appelé Radscan 600 et illustré sur la figure 1 du brevet US 7 095 030. Le dispositif possède une tête d'inspection qui inclut une caméra vidéo, un gamma détecteur collimaté et un dispositif de télémétrie laser. Dans ce dispositif le collimateur est interchangeable. L'inconvénient de ce dispositif est, qu'en fonctionnement, des points chauds de moindre intensité risquent d'être masqués par des points chauds plus intenses hors du champ d'observation du collimateur

Enfin, on connait aussi un dispositif de caractérisation radiologique comportant une sonde de mesure radiologique dont une extrémité sensible est placée dans un collimateur interchangeable, voir US 3 107 276.

### EXPOSÉ DE L'INVENTION

La présente invention a pour but de proposer un dispositif de caractérisation radiologique ne présentant pas les limitations et difficultés ci-dessus, et en particulier qui soit capable de caractériser des sources de rayonnement ionisant même d'intensité moindre en présence de sources de rayonnement ionisant plus intenses sans être gêné par du bruit parasite.

Un autre but de l'invention est de proposer un dispositif de caractérisation radiologique à collimateur ajustable.

Un autre but de l'invention est de proposer un dispositif de caractérisation radiologique à sonde de mesure radiologique interchangeable.

Pour y parvenir, la présente invention est un dispositif de caractérisation radiologique comportant au moins une sonde de mesure radiologique collimatée dont une extrémité sensible est placée dans un collimateur interchangeable ayant un champ d'observation et une ouverture. Le collimateur est porté par un porte-collimateur et l'ensemble collimateur et porte-collimateur est inséré dans un empilement entre deux écrans de blindage, les écrans assurant le blindage étant interchangeables de manière à ajuster leur épaisseur, l'ensemble collimateur et porte-collimateur et les écrans de blindage assurant une protection de la sonde vis-à-vis de rayonnements ionisants parasites provenant de sources de rayonnement ionisant situées hors du champ d'observation du collimateur le collimateur étant sensiblement en forme de U avec une ouverture et un fond au niveau duquel est logée l'extrémité sensible de la sonde de mesure.

Des collimateurs ayant des ouvertures de tailles différentes peuvent être logés dans le porte-collimateur.

De manière avantageuse, la sonde de mesure est, elle aussi, interchangeable.

La sonde de mesure peut être une sonde de spectrométrie gamma ou une sonde de débit de dose.

Le dispositif de caractérisation radiologique comporte, de préférence, en outre, un porte-sonde amovible dans lequel est placée la sonde, le porte-sonde, lorsqu'il est logé dans le collimateur, permettant de positionner l'extrémité sensible de la sonde dans le collimateur.

Lorsque le porte-sonde loge plusieurs sondes, elles sont agencées en faisceau.

Avantageusement, chaque écran de blindage comporte une ou plusieurs plaques de blindage, lorsqu'il y a plusieurs plaques, elles sont en pile. Il est ainsi possible d'ajuster l'épaisseur de l'écran de blindage.

Une plaque de blindage voisine du collimateur peut être chanfreinée à proximité de l'ouverture du collimateur pour augmenter son champ d'observation.

L'un des écrans de blindage comporte un trou traversant dans lequel passe la sonde.

On peut prévoir des moyens de blocage en rotation et en translation des écrans de blindage par rapport au porte-collimateur et au collimateur.

Le dispositif de caractérisation radiologique peut comporter, en outre, une caméra visible ou infrarouge et/ou un dispositif de télémétrie solidaire des moyens de blocage et/ou un spot d'éclairage. Ils sont bien utiles lors de l'examen de scènes complexes.

Il est préférable de prévoir en outre des moyens de verrouillage de la sonde lorsqu'elle est en place dans le collimateur, de manière à pouvoir déplacer le dispositif de caractérisation sans soucis.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
les figures 1A, 1B, 1C montrent respectivement en éclaté, en coupe et assemblé, un exemple de dispositif de caractérisation radiologique objet de l'invention ;
la figure 2A est un graphique illustrant le débit de fluence acquis par la sonde de mesure en fonction de l'énergie de la source de rayonnement ionisant observée et la figure 2B un graphique illustrant le signal rapport sur bruit apporté par le collimateur en fonction de l'énergie de la source de rayonnement ionisant observée ;
les figures 3A, 3B illustrent, en vue de dessus, le pouvoir de collimation du collimateur du dispositif de caractérisation radiologique de l'invention en le comparant à un dispositif de caractérisation radiologique sans collimateur ;
les figures 4A à 4H illustrent la procédure à appliquer pour changer le collimateur du dispositif de caractérisation radiologique de l'invention ;
les figures 5A à 5C illustrent comment modifier l'enchaînement des figures 4 pour changer la sonde de mesure ;
les figures 6A, 6B, 6C illustrent en coupe transversale divers porte-sondes ;
les figures 7A, 7B, 7C sont des cartographies de débit de dose d'une case dans laquelle se trouve une cuve contenant ou ayant contenu des solutions de produits de fission, cette case étant soumise à une procédure d'assainissement.

Les différentes configurations représentées du dispositif de caractérisation radiologique doivent être comprises comme n'étant pas exclusives les unes des autres.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

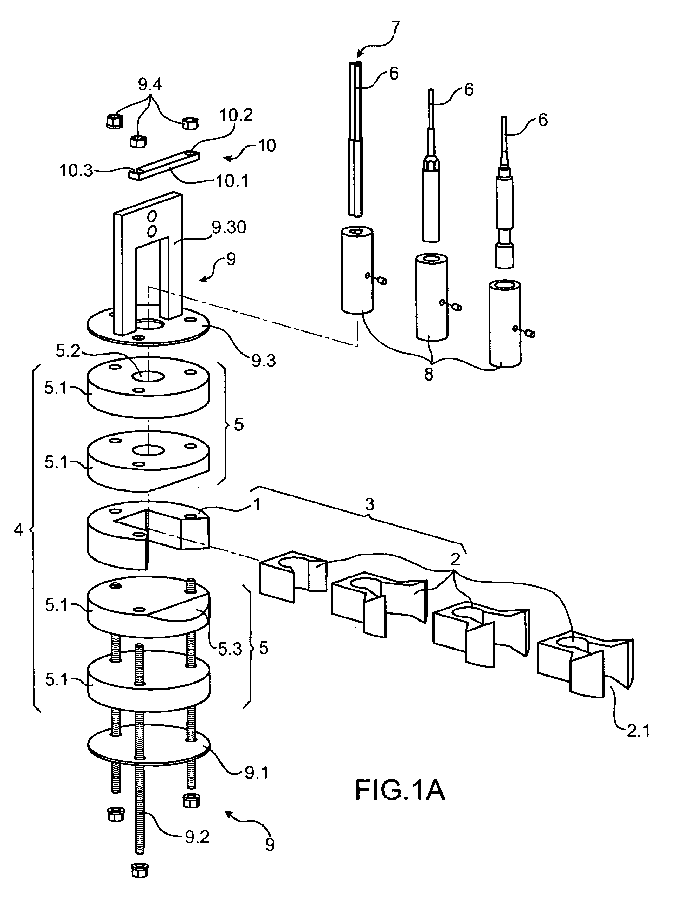

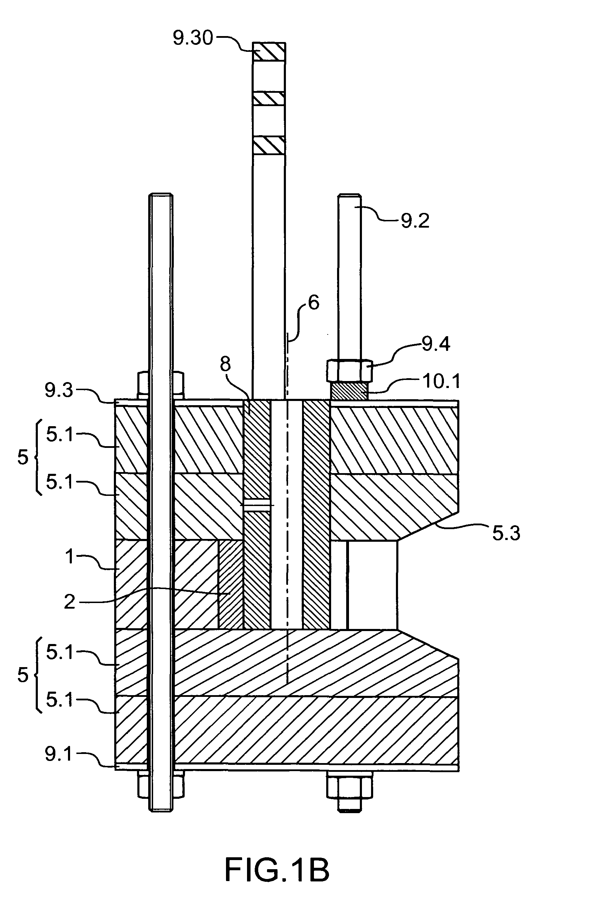

On va se référer à la figure 1A qui est une vue, en éclaté, d'un exemple de dispositif de caractérisation radiologique selon l'invention. La figure 1B représente une coupe transversale du même dispositif de caractérisation radiologique selon l'invention. Il comporte un porte-collimateur 1 destiné à accueillir un collimateur 2. Le collimateur 2 est sensiblement en forme U avec un fond à partir duquel partent deux branches qui contribuent à délimiter l'ouverture 2.1 du collimateur 2. Le porte-collimateur 1 peut être sensiblement en forme du U ou de C, le fond du U du collimateur venant se loger dans le porte-collimateur 1. Ainsi le collimateur 2 est interchangeable et le porte-collimateur 1 est apte à accueillir des collimateurs 2 ayant des ouvertures 2.1 de taille différentes mais une même base. Sur la figure 1A, on a représenté un jeu de quatre collimateurs 2 qui peuvent être installés sur le porte-collimateur 1 chacun leur tour. Ces quatre collimateurs 2 ont des ouvertures 2.1 de taille différentes, correspondant par exemple à des angles compris entre 10° et 90°, ces angles étant représentés, sur la figure 1A, décroissants plus on s'éloigne du porte-collimateur 1. L'ensemble formé du collimateur 2 monté sur le porte-collimateur 1, que l'on appellera par la suite ensemble de collimation 3, est placé en sandwich dans un empilement 4 entre deux écrans de blindage 5. Les écrans de blindage 5 sont de préférence, sensiblement plans. Les écrans de blindage 5 sont interchangeables, ce qui permet d'ajuster leur épaisseur en fonction de la localisation d'une source de rayonnement ionisant gamma à observer par rapport à une ou plusieurs sources de rayonnement ionisant gamma voisines et considérées comme parasites. Les sources de rayonnement ionisant ne sont pas représentées.

L'ouverture 2.1 du collimateur 2 se trouve au niveau d'un bord de l'empilement 4. Le dispositif de caractérisation radiologique comporte, de plus, au moins une sonde de mesure radiologique 6 ayant une partie sensible logée dans le collimateur 2 au niveau du fond du U, l'ouverture 2.1 du collimateur 2 étant libre. Cette sonde de mesure 6 est également interchangeable. Cette sonde de mesure 6 peut être une sonde de mesure de débit de dose, par exemple la sonde SHI de la société Saphymo. En variante, il peut s'agir d'une sonde de spectrométrie gamma à base de semiconducteurs tels que par exemple du CdZnTe. Il est possible d'utiliser simultanément plusieurs sondes 6 de spectrométrie gamma agencées en faisceau 7 comme on le verra ultérieurement. On prévoit, de préférence, un porte-sonde 8 pour positionner, avec précision, la sonde 6 (ou les sondes) dans le collimateur 2, ce qui offre la possibilité d'utiliser des sondes de mesure 6 qui n'auraient pas les mêmes sections transversales. Le porte-sonde 8 est amovible et peut prendre la forme d'un manchon dans lequel est insérée la sonde de mesure 6 ou le faisceau 7 de sondes de mesure, l'ensemble porte-sonde 8, sonde de mesure 6 étant logé dans le collimateur 2 au niveau du fond du U. Ce porte-sonde 8 peut être réalisé à base d'un matériau tel que le cuivre, ce qui permet de filtrer, en outre, des rayonnements ionisants d'énergies les plus basses.

Le porte-sonde 8 peut être associé à une sonde de mesure 6 donnée, il a une section transversale extérieure qui correspond à l'espace délimité par le fond du collimateur 2 et une section transversale intérieure qui correspond à la section transversale de la sonde de mesure 6 ou du faisceau 7 de sondes de mesure. L'ensemble porte-sonde 8 - sonde de mesure 6 sera appelé par la suite ensemble de mesure 11. L'ensemble de mesure 11 vient en appui sur l'écran de blindage 5 surmontant l'ensemble de collimation 3.

Les deux écrans de blindage 5 et l'ensemble de collimation 3 permettent de protéger la sonde de mesure 6 de tout rayonnement ionisant parasite provenant de sources de rayonnement ionisant placées hors du champ d'observation du collimateur 2. Les deux écrans de blindage 5 peuvent être formés chacun d'une ou plusieurs plaques 5.1, lorsqu'il y a plusieurs plaques 5.1, elles sont en pile. Les écrans de blindage 5 et le porte-collimateur 1 seront réalisés dans un matériau faisant obstacle au rayonnement ionisant tel que le plomb par exemple. Le collimateur 2 pourra être en tungstène par exemple.

L'un des écrans blindage 5 comporte un trou traversant 5.2 au travers duquel passe la sonde de mesure 6 et le porte-sonde 8 s'il existe.

Le nombre de plaques de blindage 5.1 n'est pas forcément le même d'un côté et de l'autre de l'ensemble de collimation 3.

Il est possible de prévoir qu'au moins une plaque de blindage 5.1, la plus proche possible du collimateur 2 ait un bord chanfreiné 5.3 au niveau de l'ouverture 2.1 du collimateur 2 de manière à augmenter le champ d'observation du collimateur 2.

On peut prévoir en outre des moyens de blocage 9 pour bloquer les différents constituants de l'empilement 4 aussi bien en rotation qu'en translation. Les moyens de blocage 9 comportent une platine inférieure 9.1 depuis laquelle se projettent trois tiges de centrage 9.2. Elles traversent les écrans de blindage 5 et le porte-collimateur 1. Ces tiges de centrage 9.2 empêchent une rotation d'un des constituants de l'empilement 4 par rapport aux autres. L'empilement 4 repose sur la platine inférieure 9.1. Dans l'exemple on a représenté trois tiges de centrage 9.2.

Ces moyens de blocage 9 comportent également une platine supérieure 9.3 au travers de laquelle passent les tiges de centrage 9.2. Elle est destinée à coiffer l'empilement 4. On trouve également des écrous 9.4 à visser sur les tiges de centrage 9.2 qui sont filetées au moins localement pour maintenir la platine supérieure 9.3 plaquée contre l'écran de blindage 5 qu'elle coiffe. On prévoit également des moyens de verrouillage 10 de la sonde de mesure 6 qui peuvent prendre la forme d'une barrette 10.1 dont une extrémité est pourvue d'un trou traversant 10.2 pour l'enfiler sur une des tiges de centrage 9.2 et l'autre d'une encoche 10.3 destinée à se caler sur une autre tige de centrage 9.2. La barrette 10.1, lorsqu'elle est en position de verrouillage, est maintenue plaquée sur la platine supérieure 9.3 grâce aux écrous 9.4 qui sont vissés sur les tiges de centrage 9.2. Elle empêche que la sonde de mesure 6 se déplace en translation.

La platine supérieure 9.3 peut être dotée d'une poignée 9.30 pour faciliter le déplacement du dispositif de caractérisation et l'orientation angulaire du collimateur 2 et plus particulièrement de son ouverture 2.1.

L'empilement 4 a été représenté en forme de cylindre de révolution mais ce n'est pas limitatif. Les écrans de blindage 5 peuvent prendre, dans ce cas, la forme de disques.

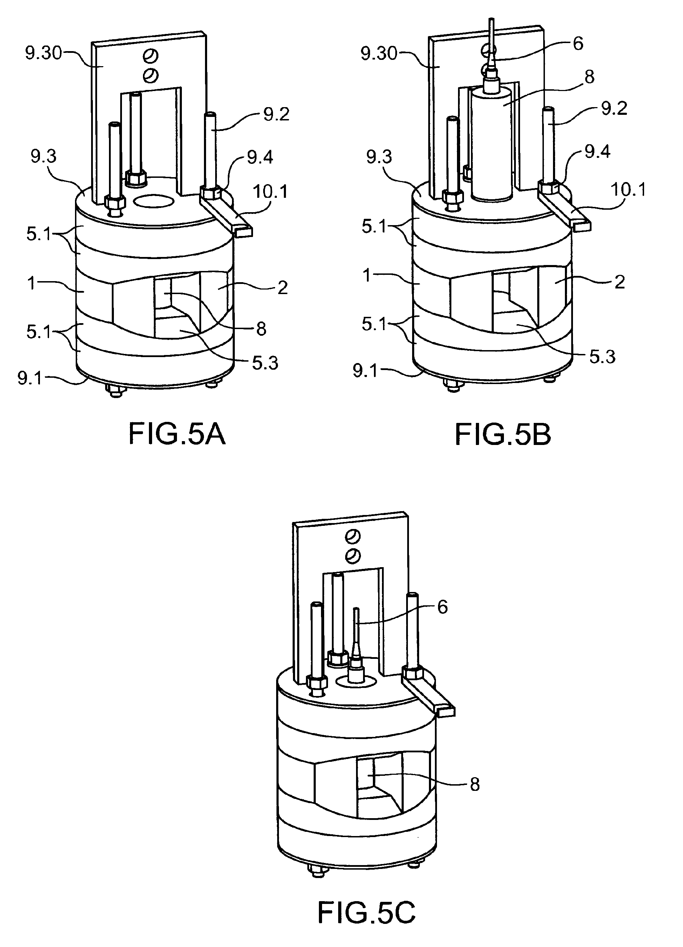

Avec un tel dispositif, il est aisé de modifier le nombre de plaques de blindage 5.1 en fonction de la configuration de l'espace dans lequel on utilise le dispositif de caractérisation radiologique objet de l'invention. Il est ainsi possible de rajouter des plaques de blindage 5.1 entre la platine inférieure 9.1 et l'ensemble de collimation 3, si une source de rayonnement ionisant (non représentée) très intense est située sous le dispositif. Il serait bien sûr possible de les rajouter entre la platine supérieure 9.3 et l'ensemble de collimation 3, si la source de rayonnement ionisant très intense est située au dessus du dispositif. Ainsi, les deux écrans de blindage 5 n'ont pas forcément la même épaisseur comme illustré sur les figures 5A à 5C. Ils ne possèdent pas forcément le même nombre de plaques de blindage 5.1. Il est également possible que les plaques de blindage 5.1 n'aient pas toutes la même épaisseur. Sur les figures 5A à 5C, la plaque de blindage 5.1 qui repose sur la platine inférieure 9.1 est plus épaisse que les autres. Ce n'est qu'un exemple. On adaptera les longueurs des tiges de centrage 9.2 en fonction de l'épaisseur des deux écrans de blindage 5 mis en oeuvre.

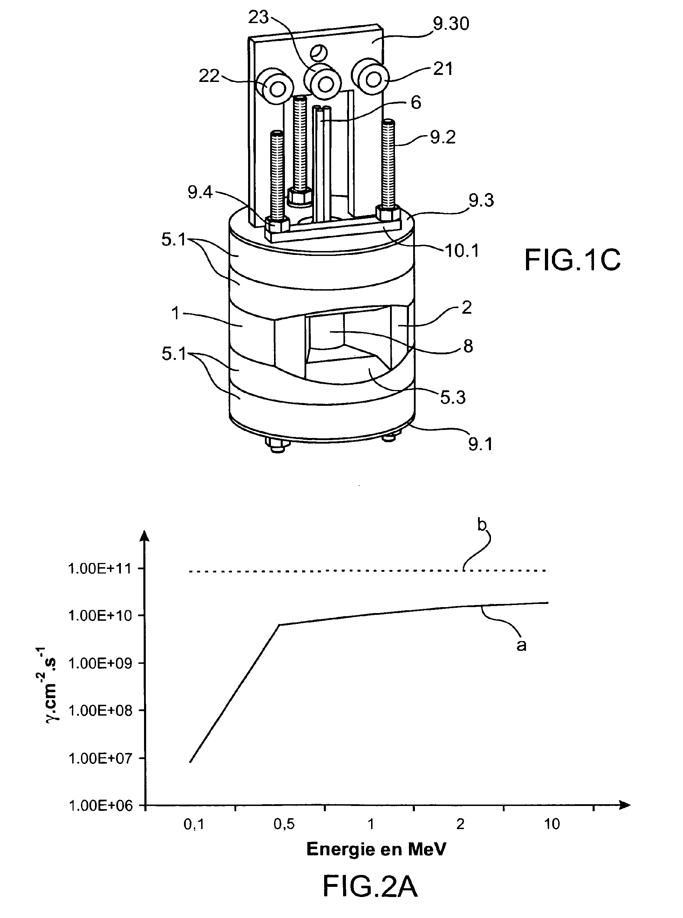

Sur la figure 1C, le dispositif de caractérisation radiologique objet de l'invention est montré en trois dimensions. Il comporte, en outre, monté sur la poignée 9.30 de la platine supérieure 9.3 une caméra infrarouge ou visible 21, en noir et blanc ou en couleurs et/ou un dispositif de télémétrie 22. La caméra 21 permet de prendre une photo visible ou infrarouge de la scène observée. Le dispositif de télémétrie 22 permet de mesurer la distance séparant le dispositif de caractérisation radiologique d'une source de rayonnement ionisant observée. Un spot d'éclairage repère 23 permet de d'éclairer la scène.

L'efficacité d'un ensemble de collimation 3 avec un collimateur 2 ayant une ouverture, c'est-à-dire un angle d'ouverture, de 90° a été vérifiée grâce à une série de calculs à l'aide du code de calcul avancé MERCURE 6.2. Il s'agit d'un code de calcul permettant d'évaluer, pour une source de rayonnement ionisant ayant une énergie donnée, le débit de fluence gamma au niveau du détecteur. On rappelle que la fluence est, en un point donné de l'espace, le quotient du nombre de particules qui pénètrent en un intervalle de temps donné dans une sphère convenablement petite centrée en ce point, par l'aire du grand cercle de cette sphère. Le débit de fluence est lui le quotient de la variation de la fluence par unité de temps.

La source de rayonnement ionisant est de grand volume 10 mètres par 6 mètres par 2 mètres. La sonde de mesure de débit de dose est placée à 1 mètre de la source de rayonnement ionisant. On a donné à la source de rayonnement ionisant cinq valeurs discrètes d'énergie à savoir 100 keV, 500 keV, 1 MeV, 2 MeV, 10 MeV. On a effectué ces calculs de débit de fluence avec le dispositif de caractérisation radiologique de l'invention, le collimateur étant en place ou absent. Le graphique de la figure 2A montre le débit de fluence en fonction de l'énergie de la source de rayonnement ionisant, la courbe référencée (b) correspond au cas où le collimateur est absent dans le dispositif de caractérisation et la courbe référencée (a) correspond au cas où le collimateur est présent dans le dispositif de caractérisation. Les calculs faits avec le collimateur montrent que le débit de fluence varie en fonction de l'énergie de la source. Sans le collimateur, le débit de fluence est sensiblement constant.

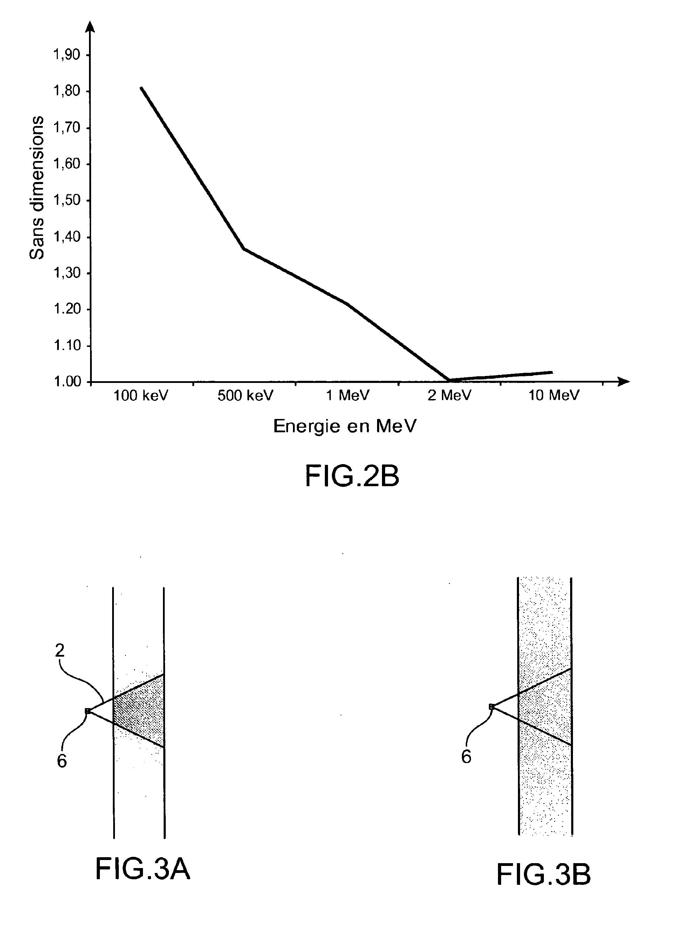

En utilisant toujours, la même source de rayonnement ionisant et le dispositif de caractérisation radiologique objet de l'invention, on a essayé d'évaluer le rapport signal sur bruit apporté par l'ensemble de collimation. On se réfère à la figure 2B. Pour chacune des énergies discrètes évoquées plus haut, on a calculé la fluence, dans une première configuration, dans laquelle la source de rayonnement ionisant est située dans le champ d'observation du collimateur et, dans une seconde configuration, dans laquelle la source de rayonnement ionisant est située strictement hors du champ d'observation du collimateur. Le rapport signal sur bruit est une grandeur qui est proportionnelle au rapport des valeurs calculées dans la première configuration sur les valeurs calculées dans la seconde configuration. Le rapport signal sur bruit varie d'environ 2 à environ 1 et il décroit alors que les énergies augmentent. Le code de calcul MERCURE normalise la source à une activité volumique de 1 Bq/cm³.

Sur les figures 3, on a représenté une modélisation du flux acquis par la sonde de mesure dans le cas où le collimateur est présent (figure 3A) et dans le cas où il est absent (figure 3B). Le dispositif de caractérisation radiologique est représenté partiellement en vue de dessus. Le flux acquis par la sonde de mesure 6 est bien plus petit en présence du collimateur.

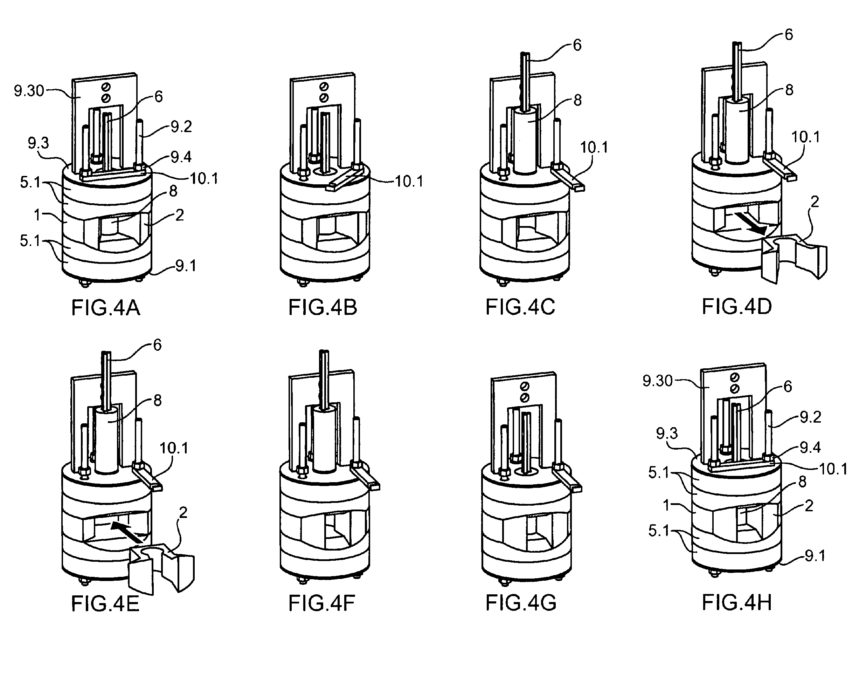

On va maintenant, en se référant aux figures 4A à 4H, montrer comment il est possible de changer de collimateur 2. Sur la figure 4A, le dispositif de caractérisation radiologique comporte un collimateur 2 à grand champ d'observation. Il comporte également trois sondes de mesure 6 agencées en faisceau 7. Sur la figure 4B, on a déverrouillé l'ensemble de mesure 11, en libérant la barrette 10.1 de l'une des tiges de centrage 9.2.

Sur la figure 4C, on a extrait l'ensemble de mesure 11 du collimateur 2 en le soulevant. On peut laisser l'ensemble de mesure 11 inséré dans l'écran de blindage 5 possédant le trou traversant 5.2. Sur la figure 4D, on a extrait le collimateur 2 du porte-collimateur 1, en le tirant comme un tiroir. Sur la figure 4E, on loge un nouveau collimateur 2 dans le porte-collimateur 1 en le poussant comme un tiroir. Sur la figure 4F, le nouveau collimateur 2 est en place. Il comporte un champ d'observation plus petit que celui qui a été ôté. Sur la figure 4G, on a remis en place l'ensemble de mesure 11 en le descendant dans l'écran de blindage 5 supérieur et le collimateur 2 jusqu'à ce qu'il bute sur l'autre écran de blindage 5 sur lequel repose l'ensemble de collimation 3. Il n'y a plus qu'à remettre en place la barrette de verrouillage 10.1 comme indiqué sur la figure 4H. Si on veut changer la sonde de mesure 6, il est possible d'effectuer les opérations suivantes. On effectue les opérations décrites aux figures 4A à 4C. On ôte alors complètement l'ensemble de mesure 11 comme sur la figure 5A et on le remplace par un autre comme sur les figures 5B, 5C. Sur la figure 5C, le nouvel ensemble de mesure 11 est en place. Il n'y a plus qu'à remettre en place la barrette de verrouillage 10.1 comme indiqué sur la figure 4H. Il est bien sûr possible, dans une succession d'étapes, de combiner à la fois le changement du collimateur 2 et celui de l'ensemble de mesure 11.

La sonde de mesure 6 reçoit le spectre gamma émis par la source de rayonnement ionisant (non représentée). Les signaux fournis par la sonde de mesure en réponse au spectre gamma reçu permettent d'estimer le débit de flux ou l'activité de chaque radioélément émetteur de rayonnement ionisant présent dans le spectre. Ainsi l'interprétation du spectre gamma permet, par exemple lors d'une phase d'assainissement d'un local, le suivi « en ligne » de chaque radioélément présent dans le spectre reçu.

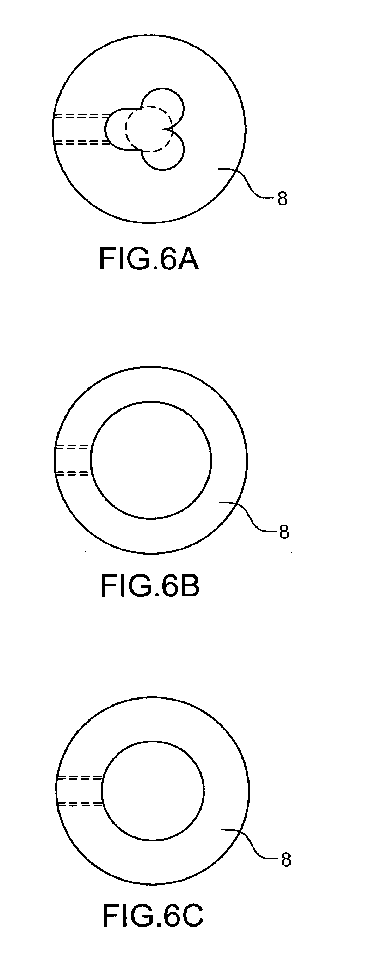

Les figures 6A, 6B, 6C montrent des coupes transversales de plusieurs porte-sonde 8. Les porte-sondes sont des cylindres de révolution dont le diamètre extérieur est le même quel que soit la sonde qu'il va accueillir. Le porte-sonde 8 de la figure 6A est destiné à accueillir un faisceau de plusieurs sondes de mesure de spectrométrie, dans l'exemple, on en prévoit trois (comme illustré sur la figure 4A part exemple) mais ce nombre n'est pas limitatif. Les trois sondes peuvent être les mêmes ou avoir des volumes différents. On pourrait par exemple prévoir des sondes de volume croissant, par exemple de 1 mm³, 5 mm³ et 60 mm³. Les mesures réalisées permettent de couvrir une dynamique de mesure importante. En variante, il est possible d'utiliser des sondes de même volume et de sommer les spectres de rayonnement gamma acquis par chacune des sondes. Cette dernière configuration permet de conserver la résolution de la détection en utilisant un détecteur de faible volume tout en augmentant le rendement par rapport au cas où l'on utiliserait une seule sonde de volume triple. Sur les figures 6B, 6C le porte-sonde 8 est destiné à accueillir une seule sonde, le volume de la sonde devant être placée dans le porte-sonde de la figure 6B est plus important que celui de la sonde de mesure devant être placée dans le porte-sonde de la figure 6C.

Le dispositif de caractérisation radiologique objet de l'invention peut être utilisé en exploitant directement les signaux délivrés par la ou les sondes de mesure et en assurant le traitement de ces signaux « en ligne » à l'aide d'un simple constat ou d'un tableau. On utilise une méthode absolue de mesure. On déplace le dispositif de caractérisation radiologique sur au moins une verticale devant la scène à caractériser en le pendant à une perche et en lui donnant une ou plusieurs orientations angulaires par altitude. En fonction des signaux délivrés, on peut changer le collimateur, l'épaisseur de l'un, de l'autre ou des deux écrans de blindage ou même la sonde de mesure.

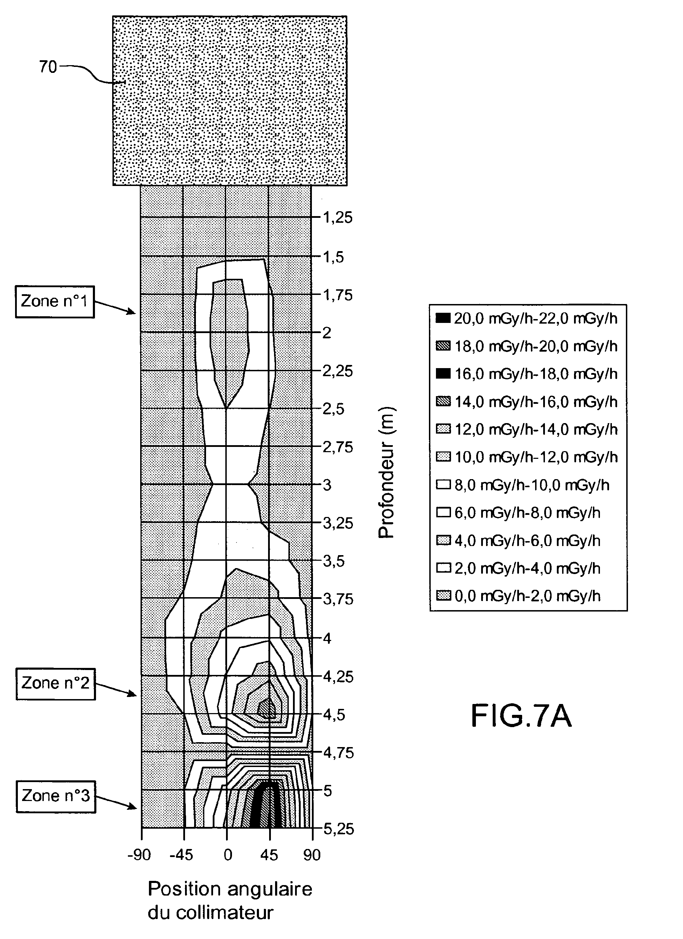

En variante, il est possible, de faire un traitement a posteriori. On utilise une méthode relative de mesure. Pour une source de rayonnement ionisant donnée et un collimateur donné, on va dresser une cartographie de la scène observée en termes de débits de dose. On va définir des angles d'orientation à faire prendre au dispositif de caractérisation et donc à la sonde de mesure, de part et d'autre d'un angle nul dans lequel l'axe de visée du collimateur est sensiblement normal à la scène observée. On définit également une pluralité d'altitudes. On mesure, par exemple, le débit de dose pour une altitude donnée et un certain nombre d'angles d'orientation. On peut ainsi tracer une première cartographie comme illustré sur la figure 7A. Elle délimite des points ou des zones de concentration de la contamination. Si la scène est ensuite assainie, on peut procéder à l'issue de cet assainissement à une nouvelle série de mesures, et à la constitution d'une nouvelle cartographie avec les mêmes altitudes et les mêmes angles pour évaluer l'efficacité de la décontamination. On peut également en changeant la sonde de mesure pour utiliser une sonde de spectrométrie gamma estimer la qualité des radioéléments observés. On peut ensuite coupler la cartographie de débit de dose avec le spectre gamma pour estimer l'activité de la scène observée.

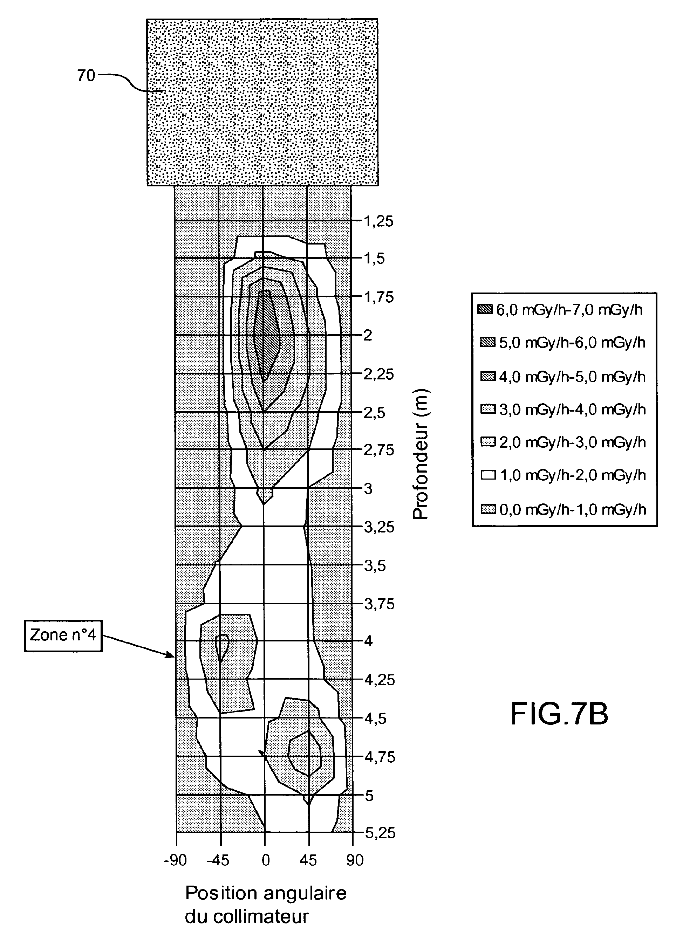

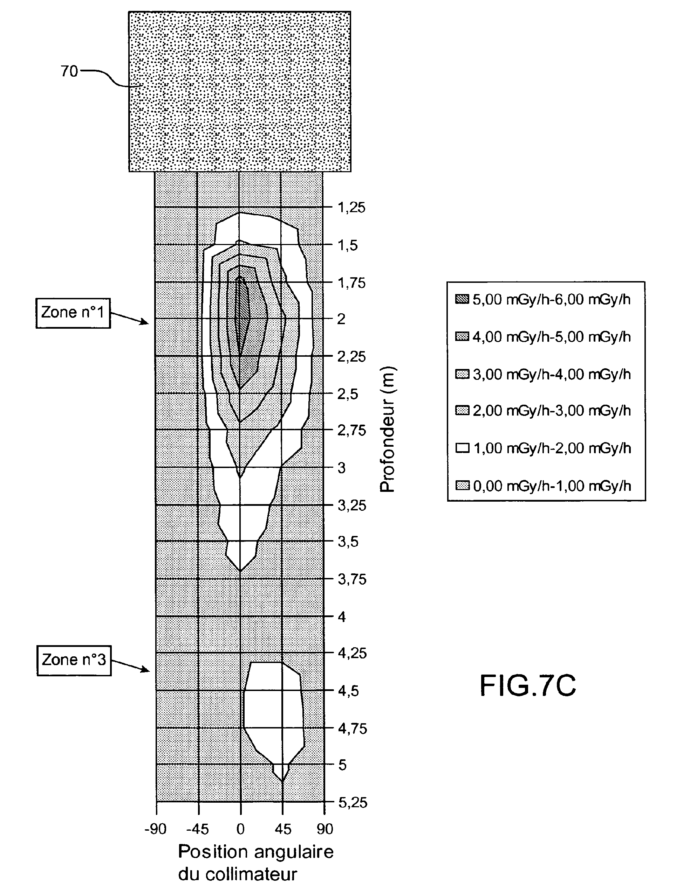

Les figures 7A, 7B, 7C sont des cartographies de débit de dose d'une case contenant une cuve de collecte et d'entreposage de solutions de produits de fission. Les mesures ont été faites à des profondeurs comprises entre -1 mètre et -5,25 mètres. Le balayage a été fait sur une plage d'angles allant de -90° à +90°. La case se trouve au sous-sol d'un bâtiment sous une dalle de béton 70. Ces cartographies correspondent à un état juste avant le début de l'assainissement (figure 7A), à un état en cours de l'assainissement (figure 7B) et à un état final de l'assainissement (figure 7C).

Sur la figure 7A, on distingue trois zones pour lesquelles le niveau de contamination est important. Il s'agit d'une zone n° 1, proche du plafond, d'une zone n° 2 intermédiaire et d'une zone n° 3 en fond de case. La zone n° 1 est attribuée à des tuyauteries telles qu'un pot de prise d'échantillons. La zone n° 2 est attribuée à une partie interne de la cuve de type éjecteur ou comme étant une zone de marnage. La zone n° 3 est attribuée au fond de la cuve qui contient encore des solutions actives.

Sur la figure 7B, on s'aperçoit que les débits de dose ont décru au moins pour les zones n° 2 et n° 3. L'inspection a lieu alors que des opérations d'assainissement ont débuté et que la cuve a été vidée. Un nouvelle zone de contamination intense, dénommée zone n° 4 est apparue dans la partie gauche de la carte, à une altitude comprise entre environ -3,75 et -4,5 mètres. Elle correspond à des tuyauteries utilisées pour vider la cuve. La zone n° 1 est toujours présente car le pot de prise d'échantillons n'a pas été traité.

Les opérations d'assainissement se sont poursuivies, la cuve a été rincée et l'efficacité du rinçage ne peut être niée sur la figure 7C. La zone n° 4 a disparu, l'intensité de zone n° 3 a diminué. Seule subsiste de manière intense la zone n° 1 qui n'a pas été décontaminée. Les résultats de la cartographie et les constats d'efficacité de la contamination sont probants et précis.

On comprendra que différents changements et modifications peuvent être apportés au dispositif de caractérisation radiologique sans sortir du cadre de l'invention.

## Revendications

1. Dispositif de caractérisation radiologique comportant au moins une sonde de mesure radiologique (6) collimatée dont une extrémité sensible est placée dans un collimateur (2) interchangeable ayant un champ d'observation, **caractérisé en ce que** le collimateur (2) est porté par un porte-collimateur (1) l'ensemble collimateur et porte collimateur (3) étant inséré dans un empilement entre deux écrans de blindage (5), les écrans blindage (5) étant interchangeables de manière à ajuster leur épaisseur, l'ensemble collimateur et porte-collimateur (3) et les écrans de blindage (5) assurant une protection de la sonde (6) vis-à-vis de rayonnements ionisants parasites provenant de sources de rayonnement ionisant situées hors du champ d'observation du collimateur (2), le collimateur étant sensiblement en forme de U avec une ouverture (2.1) et un fond au niveau duquel est logée l'extrémité sensible de la sonde de mesure.

2. Dispositif de caractérisation radiologique selon la revendication 1, dans lequel le porte-collimateur (1) est destiné à loger des collimateurs (2) ayant des ouvertures (2.1) de tailles différentes.

3. Dispositif de caractérisation radiologique selon l'une des revendications 1 ou 2, dans lequel la sonde de mesure (6) est interchangeable.

4. Dispositif de caractérisation radiologique selon l'une des revendications 1 à 3, dans lequel la sonde de mesure (6) est une sonde de spectrométrie gamma ou une sonde de débit de dose.

5. Dispositif de caractérisation radiologique selon l'une des revendications 1 à 4, comportant, en outre, un porte-sonde (8) amovible dans lequel est placée la sonde (6), le porte-sonde (8) lorsqu'il est logé dans le collimateur (2) permettant de positionner l'extrémité sensible de la sonde (6) dans le collimateur (2).

6. Dispositif de caractérisation radiologique selon la revendication 5, dans lequel lorsque le porte-sonde (8) loge plusieurs sondes (6), elles sont agencées en faisceau (7).

7. Dispositif de caractérisation radiologique selon l'une des revendications précédentes, dans lequel chaque écran de blindage (5) comporte une ou plusieurs plaques de blindage (5.1), lorsqu'il y a plusieurs plaques (5.1), elles sont en pile.

8. Dispositif de caractérisation radiologique selon la revendication 7, dans lequel une plaque de blindage (5.1) voisine du collimateur (2) a un bord chanfreiné (5.3) à proximité de l'ouverture (2.1) du collimateur (2) pour augmenter son champ d'observation.

9. Dispositif de caractérisation radiologique selon l'une des revendications précédentes, dans lequel l'un des écrans de blindage (5) comporte un trou traversant (5.2) dans lequel passe la sonde (6).

10. Dispositif de caractérisation radiologique selon la revendication 9 rattachée à la revendication 5, dans lequel le porte-sonde (8) passe à travers le trou traversant (5.2).

11. Dispositif de caractérisation radiologique selon l'une des revendications précédentes, comportant en outre des moyens de blocage en rotation et en translation (9) des écrans de blindage (5) par rapport au porte-collimateur (1) et au collimateur (2).

12. Dispositif de caractérisation radiologique selon la revendication 11, comportant en outre une caméra visible ou infrarouge (21) et/ou un dispositif de télémétrie (22) solidaire des moyens de blocage (9) et/ou un spot d'éclairage (23).

13. Dispositif de caractérisation radiologique selon l'une des revendications précédentes, comportant en outre des moyens de verrouillage (10) de la sonde (6) lorsqu'elle est en place dans le collimateur (2).

## Patentansprüche

1. Vorrichtung zur radiologischen Charakterisierung, umfassend wenigstens eine radiologische kollimierte Messsonde (6), von welcher ein sensitives Ende in einem austauschbaren Kollimator (2) angeordnet ist, welcher ein Beobachtungsfeld aufweist, **dadurch gekennzeichnet, dass** der Kollimator (2) von einem Kollimator-Träger (1) getragen ist, wobei die Baugruppe (3) aus Kollimator und Kollimator-Träger in einem Stapel zwischen zwei Abschirm-Schirmen (5) eingefügt ist, wobei die Abschirm-Schirme (5) derart austauschbar sind, dass ihre Dicke eingestellt werden kann, wobei die Baugruppe (3) aus Kollimator und Kollimator-Träger und die Abschirm-Schirme (5) einen Schutz der Sonde (6) gegenüber parasitären ionisierenden Strahlungen sicherstellen, welche aus Quellen ionisierender Strahlung stammen, welche sich außerhalb von dem Beobachtungsfeld des Kollimators (2) befinden, wobei der Kollimator im Wesentlichen U-förmig mit einer Öffnung (2.1) und einem Boden ist, auf dessen Niveau das sensitive Ende der Messsonde aufgenommen ist.

2. Vorrichtung zur radiologischen Charakterisierung nach Anspruch 1, wobei der Kollimator-Träger (1) dazu vorgesehen ist, Kollimatoren (2) aufzunehmen, welche Öffnungen (2.1) verschiedener Größen aufweisen.

3. Vorrichtung zur radiologischen Charakterisierung nach einem der Ansprüche 1 oder 2, wobei die Messsonde (6) austauschbar ist.

4. Vorrichtung zur radiologischen Charakterisierung nach einem der Ansprüche 1 bis 3, wobei die Messsonde (6) eine Gammaspektrometrie-Sonde oder eine Dosisleistungs-Sonde ist.

5. Vorrichtung zur radiologischen Charakterisierung nach einem der Ansprüche 1 bis 4, welche ferner einen abnehmbaren Sonden-Träger (8) umfasst, in welchem die Sonde (6) platziert ist, wobei der Sonden-Träger (8), wenn er in dem Kollimator (2) aufgenommen ist, es erlaubt, das sensitive Ende der Sonde (6) in dem Kollimator (2) zu positionieren.

6. Vorrichtung zur radiologischen Charakterisierung nach Anspruch 5, wobei wenn der Sonden-Träger (8) mehrere Sonden (6) aufnimmt, diese in einem Bündel (7) angeordnet sind.

7. Vorrichtung zur radiologischen Charakterisierung nach einem der vorhergehenden Ansprüche, wobei jeder Abschirm-Schirm (5) eine oder mehrere Abschirm-Platten (5.1) umfasst, wobei wenn es mehrere Platten (5.1) gibt, diese gestapelt angeordnet sind.

8. Vorrichtung zur radiologischen Charakterisierung nach nach Anspruch 7, wobei eine dem Kollimator (2) benachbarte Abschirm-Platte (5.1) einen abgeschrägten Rand in der Nähe der Öffnung (2.1) des Kollimators (2) aufweist, um dessen Beobachtungsfeld zu vergrößern.

9. Vorrichtung zur radiologischen Charakterisierung nach einem der vorhergehenden Ansprüche, wobei der eine der Abschirm-Schirme (5) ein Durchgangs-Loch (5.2) umfasst, durch welches die Sonde (6) hindurchtritt.

10. Vorrichtung zur radiologischen Charakterisierung nach Anspruch 9, unter Rückbeziehung auf Anspruch 5, wobei der Sonden-Träger (8) durch das Durchgangs-Loch (5.2) hindurchtritt.

11. Vorrichtung zur radiologischen Charakterisierung nach einem der vorhergehenden Ansprüche, welche ferner Mittel (9) zum Festsetzen bezüglich Rotation und Translation der Abschirm-Schirme (5) gegenüber dem Kollimator-Träger (1) und dem Kollimator (2) umfasst.

12. Vorrichtung zur radiologischen Charakterisierung nach Anspruch 11, ferner umfassend eine Kamera (21) für sichtbares oder infrarotes Licht oder/und eine Telemetrie-Vorrichtung (22), fest verbunden mit den Mitteln (9) zum Festsetzen oder/und einem Beleuchtungs-Strahler (23).

13. Vorrichtung zur radiologischen Charakterisierung nach nach einem der vorhergehenden Ansprüche, ferner umfassend Verriegelungsmittel (10) für die Sonde (6), wenn sie in dem Kollimator (2) platziert ist.

## Claims

1. Radiological characterisation device comprising at least one collimated radiological measuring probe (6), a sensitive end of which is placed in an exchangeable collimator (2) with an observation field, **characterised in that** the collimator (2) is carried by a collimator holder (1), the assembly consisting of collimator and collimator holder (3) being inserted in a stack between two shielding screens (5), the shielding screens (5) being exchangeable so as to adjust the thickness thereof, the assembly consisting of collimator and collimator holder (3) and the shielding screens (5) providing protection of the probe (6) vis-à-vis parasitic ionising radiation coming from ionising radiation sources situated outside the field of observation of the collimator (2), the collimator being substantially in a U shape with an opening (2.1) and a bottom at which the sensitive end of the measuring probe is housed.

2. Radiological characterisation device according to claim 1, in which the collimator holder (1) is intended to house collimators (2) having openings (2.1) of different sizes.

3. Radiological characterisation device according to one of claims 1 or 2, in which the measuring probe (6) is exchangeable.

4. Radiological characterisation device according to one of claims 1 to 3, in which the measuring probe (6) is a gamma spectrometry probe or a dose rate probe.

5. Radiological characterisation device according to one of claims 1 to 4, also comprising a removable probe holder (8) in which the probe (6) is placed, the probe holder (8), when it is housed in the collimator (2) making it possible to position the sensitive end of the probe (6) in the collimator (2).

6. Radiological characterisation device according to claim 5, in which, when the probe holder (8) houses several probes (6), they are arranged in a bundle (7).

7. Radiological characterisation device according to one of the preceding claims, in which each shielding screen (5) comprises one or more shielding plates (5.1), and when there are several plates (5.1) they are in a stack.

8. Radiological characterisation device according to claim 7, in which a shielding plate (5.1) adjacent to the collimator (2) has a bevelled edge (5.3) close to the opening (2.1) of the collimator (2) in order to increase its field of observation.

9. Radiological characterisation device according to one of the preceding claims, in which one of the shielding screens (5) comprises a through hole (5.2) through which the probe (6) passes.

10. Radiological characterisation device according to claim 9 attached to claim 5, in which the probe holder (8) passes through the through hole (5.2).

11. Radiological characterisation device according to one of the preceding claims, also comprising means (9) of locking the shielding screens (5) rotationally and translationally with respect to the collimator holder (1) and the collimator (2).

12. Radiological characterisation device according to claim 11, also comprising a visible or infrared camera (21) and/or a telemetry device (22) secured to the locking means (9) and/or a spotlight (23).

13. Radiological characterisation device according to one of the preceding claims, also comprising means (10) of locking the probe (6) when it is in place in the collimator (2).
